# EUROPÄISCHE PATENTSCHRIFT

(11) **EP 0 884 225 B1**
(45) Veröffentlichungstag und Bekanntmachung des Hinweises auf die Patenterteilung: **05.11.2003**
(21) Anmeldenummer: 98110181.9
(22) Anmeldetag: 04.06.1998
(51) Int. Cl.: B60R 21/20

(54) **Gassack-Modul für ein Fahrzeuginsassen-Rückhaltesystem**
Airbag module for a vehicle passenger restraint system
Module de sac gonflable pour système de retenue des passagers d'un véhicule

(30) Priorität: 12.06.1997 DE 19724896
(43) Veröffentlichungstag der Anmeldung: 16.12.1998
(73) Patentinhaber: TRW Airbag Systems GmbH, 84544 Aschau am Inn (DE)
(72) Erfinder: Ruckdeschel, Rolf, 87645 Schwangau (DE); Müller, Werner, 84453 Mühldorf/Inn (DE)
(74) Vertreter: Degwert, Hartmut, Dipl.-Phys.

(56) Entgegenhaltungen:
- DE-U- 29 606 830
- US-A- 4 810 005
- US-A- 5 176 400

## Beschreibung

Die Erfindung betrifft einen Gassack-Modul für ein Fahrzeuginsassen-Rückhaltesystem, mit einem wannenförmigen Trägerteil, einem an diesem befestigten Gasgenerator und einem Klemmring, durch den die Berandung der Einblasöffnung des Gassacks an dem Trägerteil befestigt ist.

Ein Gassack-Modul dieser Bauart eignet sich besonders zur Integration in ein Fahrzeuglenkrad. Das Fahrzeuglenkrad ist zur Unterbringung des Gassack-Moduls mit einer Nabe versehen, deren Abmessungen wesentlich durch die Maße des Gassack-Moduls bestimmt werden.

Aus der DE-A-296 06 830 ist ein Gasgenerator bekannt, der im Inneren einer Lenkwelle angeordnet ist. Die dem Inneren des Lenkrades zugewandte Stirnfläche des Gasgenerators liegt an einer Halteplatte an, die zur Fixierung des Gasgenerators sowie eines Gassacks dient.

Durch die Erfindung wird ein Gassack-Modul bereitgestellt, der besonders kompakt ausgebildet ist und sich daher leicht in ein Fahrzeuglenkrad integrieren läßt. Gemäß der Erfindung ist der Gasgenerator zwischen einer ihn umgebenden Diffusorglocke und dem Boden des wannenförmigen Trägerteils gehalten. Durch diese Ausgestaltung werden zur Befestigung des Gasgenerators an dem Trägerteil keine gesonderten Bauteile wie Befestigungsflansche oder dergleichen benötigt, die zusätzlichen Bauraum erfordern würden. Vorzugsweise ist der Gasgenerator zwischen der Diffusorglocke und dem Boden des Trägerteils eingeklemmt, wodurch eine spielfreie Befestigung des Gasgenerators erzielt wird.

Bei der bevorzugten Ausführungsform des Gassack-Moduls ist die Diffusorglocke einteilig mit dem Klemmring ausgebildet, durch den die Berandung der Einblasöffnung des Gassacks am Trägerteil befestigt ist. Es muß somit nur der Klemmring an dem Trägerteil befestigt werden, um den Gassack, die Diffusorglocke und auch das Gasgeneratorgehäuse an dem Trägerteil zu befestigen. Die Montage des Gassack-Moduls wird durch diese Ausbildung sehr vereinfacht. Entsprechend vereinfacht wird auch die für das Recycling erforderliche Demontage des Gassack-Moduls.

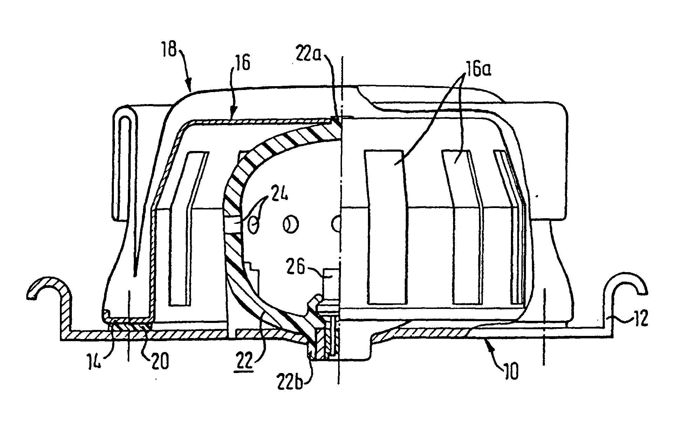

Weitere Merkmale und Vorteile der Erfindung ergeben sich aus der folgenden Beschreibung einer bevorzugten Ausführungsform und aus der Zeichnung, auf die Bezug genommen wird.

Die einzige Figur zeigt eine teilweise geschnittene, schematische Darstellung des erfindungsgemäßen Gassack-Moduls.

Der Gassack-Modul weist ein allgemein wannenförmiges Trägerteil 10 auf. Die Anbindung des wannenförmigen Trägerteils 10 an das Lenkrad ist nicht dargestellt. An dem Trägerteil 10 ist mittels eines Klemmrings 14, der einteilig mit einer Diffusorglocke 16 ausgebildet ist, die Berandung der Einblasöffnung eines Gassacks 18 unter eventueller Zwischenfügung eines Dichtringes 20 befestigt. Zwischen der Diffusorglocke 16 und dem Boden des Trägerteils 10 ist ein Gasgenerator 22 angeordnet, der ein allgemein rotationssymmetrisches Gehäuse mit einer Reihe von Austrittsöffnungen 24 in seiner Umfangswand aufweist.

Auf der Seite der Diffusorglocke 16 ist das Gehäuse des Gasgenerators 22 mit einem angeformten zylindrischen Zapfen 22a versehen, der formschlüssig in eine entsprechende Öffnung der Diffusorglocke 16 eingreift. Auf der gegenüberliegenden, dem Trägerteil 10 benachbarten Seite ist an das Gehäuse des Gasgenerators 22 ein Sockel 22b angeformt, der formschlüssig in eine entsprechende Öffnung am Boden des Trägerteils 10 eingesetzt ist. Der den Sockel 22b umgebende Wandungsbereich am Boden des Trägerteils 10 ist konkav ausgebildet und schmiegt sich an die Wandung des Gasgeneratorgehäuses an. Über den Sockel 22b sind die elektrischen Anschlüsse eines innerhalb des Gasgenerators 22 angeordneten Anzünders 26 herausgeführt. Der verbleibende Innenraum des Gasgenerators 22 ist mit (nicht gezeigtem) Gasgenerator-Material ausgefüllt.

Die Diffusorglocke 16 ist gegenüber den Austrittsöffnungen 24 des Gasgenerators 22 radial von diesem beabstandet und in ihrer Mantelfläche mit gleichmäßig über den Umfang verteilten Diffusorschlitzen 16a versehen.

Der Gassack 18 wird durch eine (nicht gezeigte) Abdeckung im gefalteten Zustand gehalten, die beispielsweise an dem an das Trägerteil 10 angeformten Umfangsrand 12 befestigt wird.

Die gezeigte Anbindung des Gasgenerators 22 an den Gassack-Modul ist in mehrfacher Hinsicht vorteilhaft. Da das Gehäuse des Gasgenerators 22 zwischen der Diffusorglocke 16 und dem Boden des Trägerteils 10 eingeklemmt und formschlüssig gehalten ist, werden keine gesonderten Befestigungsteile benötigt. Die Diffusorglocke 16 wird mit dem Klemmring 14 an dem Trägerteil 10, beispielsweise mittels Schrauben, befestigt, wodurch zugleich die Festlegung des Gasgenerators und die Anbindung des Gassacks 18 erfolgt. Da der Gasgenerator 22 zwischen der Diffusorglocke 16 und dem Trägerteil 10 angeordnet ist, wobei nur der Sockel 22b unter dem Boden des Trägerteils 10 heraussteht, ist er gegen mißbräuchlichen Zugang geschützt. Besonders in Axialrichtung ist der gezeigte Gassack-Modul besonders kompakt. Montage und Demontage sind gegenüber herkömmlichen Ausführungen, bei denen Gasgenerator und Diffusor gesondert voneinander an einem Trägerteil befestigt werden, stark vereinfacht. Schließlich werden auch die Herstellungskosten und das Gewicht des Gassack-Moduls vermindert.

## Patentansprüche

1. Gassack-Modul für ein Fahrzeuginsassen-Rückhaltesystem, mit einem wannenförmigen Trägerteil (10), einem an diesem befestigten Gasgenerator (22) und einem Klemmring (14), durch den die Berandung der Einblasöffnung des Gassacks (18) an dem Trägerteil (10) befestigt ist, **dadurch gekennzeichnet, daß** der Gasgenerator (22) zwischen einer ihn umgebenden Diffusorglocke (16) und dem Boden des Trägerteils (10) gehalten ist.

2. Gassack-Modul nach Anspruch 1, **dadurch gekennzeichnet, daß** die Diffusorglocke (16) einteilig mit dem Klemmring (14) ausgebildet ist.

3. Gassack-Modul nach Anspruch 1 oder 2, **dadurch gekennzeichnet, daß** der Gasgenerator (22) zwischen der Diffusorglocke (16) und dem Boden des Trägerteils (10) eingeklemmt ist.

4. Gassack-Modul nach einem der Ansprüche 1 bis 3, **dadurch gekennzeichnet, daß** der Gasgenerator (22) formschlüssig zwischen der Diffusorglocke (16) und dem Boden des Trägerteils (10) gehalten ist.

5. Gassack-Modul nach Anspruch 4, **dadurch gekennzeichnet, daß** das Gehäuse des Gasgenerators (22) wenigstens einen angeformten Zapfen (22a) aufweist, der in eine Öffnung der Diffusorglocke (16) paßt, und mit einem angeformten Sockel (22b) versehen ist, der passend zu einer Öffnung am Boden des Trägerteils (10) ausgebildet ist.

6. Gassack-Modul nach Anspruch 5, **dadurch gekennzeichnet, daß** die Öffnung am Boden des Trägerteils (10) von einem sich an die Wandung des Gasgenerators (22) anschmiegenden konkaven Wandungsbereich dieses Trägerteils (10) berandet ist.

7. Gassack-Modul nach einem der Ansprüche 1 bis 6, **dadurch gekennzeichnet, daß** ein Dichtring (20) zwischen dem Boden des Trägerteils (10) und der mittels des Klemmrings (14) angedrückten Berandung der Einblasöffnung des Gassacks (18) angeordnet ist.

## Claims

1. A gas bag module for a vehicle occupant restraint system, with a trough-shaped carrier part (10), a gas generator (22) fastened thereto, and a clamping ring (14) by which the rim of the inflation opening of the gas bag (18) is secured to the carrier part (10), **characterized in that** the gas generator (22) is held between a diffusor cap (16), surrounding it, and the base of the carrier part (10).

2. The gas bag module according to Claim 1, **characterized in that** the diffusor cap (16) is constructed in one piece with the clamping ring (14).

3. The gas bag module according to Claim 1 or 2, **characterized in that** the gas generator (22) is clamped in between the diffusor cap (16) and the base of the carrier part (10).

4. The gas bag module according to any of Claims 1 to 3, **characterized in that** the gas generator (22) is held between the diffusor cap (16) and the base of the carrier part (10) with an interlocking fit.

5. The gas bag module according to Claim 4, **characterized in that** the housing of the gas generator (22) has at least one integrally formed pin (22a) which fits into an opening of the diffusor cap (16), and is provided with an integrally formed socket (22b) which is constructed so as to fit an opening at the base of the carrier part (10).

6. The gas bag module according to Claim 5, **characterized in that** the opening at the base of the carrier part (10) is rimmed by a concave wall portion of this carrier part (10) which is in snug contact with the wall of the gas generator (22).

7. The gas bag module according to any of Claims 1 to 6, **characterized in that** a sealing ring (20) is arranged between the base of the carrier part (10) and the rim of the inflation opening of the gas bag (18), which rim is pressed down by means of the clamping ring (14).

## Revendications

1. Module de coussin à gaz pour un système de retenue des occupants d'un véhicule, comportant un élément support (10) en forme de cuve, un générateur de gaz (22) fixé sur celui-ci et un anneau de serrage (14) par lequel le bord de l'orifice de soufflage du coussin à gaz (18) est fixé sur l'élément support (10), **caractérisé en ce que** le générateur de gaz (22) est maintenu entre une cloche de diffuseur (16) qui l'entoure et le fond de l'élément support (10).

2. Module de coussin à gaz selon la revendication 1, **caractérisé en ce que** la cloche de diffuseur (16) est réalisée d'un seul tenant avec l'anneau de serrage (14).

3. Module de coussin à gaz selon la revendication 1 ou 2, **caractérisé en ce que** le générateur de gaz (22) est serré entre la cloche de diffuseur (16) et le fond de l'élément support (10).

4. Module de coussin à gaz selon l'une des revendications 1 à 3, **caractérisé en ce que** le générateur de gaz (22) est maintenu par coopération de formes entre la cloche de diffuseur (16) et le fond de l'élément support (10).

5. Module de coussin à gaz selon la revendication 4, **caractérisé en ce que** le boîtier du générateur de gaz (22) présente au moins un tourillon (22a) façonné qui s'ajuste dans une ouverture de la cloche de diffuseur (16), et est pourvu d'un socle (22b) façonné qui est réalisé de manière à s'ajuster dans une ouverture sur le fond de l'élément support (10).

6. Module de coussin à gaz selon la revendication 5, **caractérisé en ce que** l'ouverture sur le fond de l'élément support (10) est bordée par une région de paroi concave de cet élément support (10), laquelle se serre intimement contre la paroi du générateur de gaz (22).

7. Module de coussin à gaz selon l'une des revendications 1 à 6, **caractérisé en ce qu'**un joint d'étanchéité (20) est agencé entre le fond de l'élément support (10) et le bord de l'orifice de soufflage du coussin à gaz (18), qui est pressé par l'anneau de serrage (14).
